(19) **Europäisches Patentamt**

**European Patent Office**

**Office européen des brevets**

(11) **EP 0 838 321 B1**

(12) **EUROPEAN PATENT SPECIFICATION**

(45) Date of publication and mention
of the grant of the patent:
**10.12.2003  Bulletin 2003/50**

(51) Int Cl.7: **B29C 47/88**

(21) Application number: **97308403.1**

(22) Date of filing: **22.10.1997**

(54) **Soft transparent polyolefin resin sheet and method for producing the same**

Transparente Polyolefinweichfolie und Verfahren zu ihrer Herstellung

Feuille souple transparente de polyoléfine et procédé de fabrication

(84) Designated Contracting States:
**AT BE CH DE ES FR GB IT LI NL SE**

(30) Priority: **22.10.1996  JP  27938096**
**29.11.1996  JP  31928196**

(43) Date of publication of application:
**29.04.1998  Bulletin 1998/18**

(73) Proprietor: **IDEMITSU PETROCHEMICAL CO., LTD.**
**Minato-ku, Tokyo (JP)**

(72) Inventors:
• **Fujii, Atsushi**
**Himeji-shi, Hyogo-ken (JP)**
• **Yukumoto, Tohru**
**Himeji-shi, Hyogo-ken (JP)**
• **Fujiwara, Kenichi**
**Himeji-shi, Hyogo-ken (JP)**

(74) Representative: **Hucker, Charlotte Jane**
**Gill Jennings & Every**
**Broadgate House,**
**7 Eldon Street**
**London EC2M 7LH (GB)**

(56) References cited:
EP-A- 0 246 328       EP-A- 0 482 518
EP-A- 0 496 260       EP-A- 0 716 911
EP-A- 0 744 439       EP-A- 0 803 340
US-A- 4 415 718       US-A- 4 808 359
US-A- 4 857 409

• PATENT ABSTRACTS OF JAPAN vol. 014, no. 416 (M-1021), 7 September 1990 (1990-09-07) & JP 02 160533 A (TORAY IND INC), 20 June 1990 (1990-06-20)
• DATABASE WPI Section Ch, Week 9644 Derwent Publications Ltd., London, GB; Class A17, AN 96-439697 XP002057195 & JP 08 217942 A (KUREHA CHEM IND CO LTD), 27 August 1996 (1996-08-27)
• DATABASE WPI Section Ch, Week 9252 Derwent Publications Ltd., London, GB; Class A17, AN 92-427828 XP002057196 & JP 04 323023 A (NIPPON STEEL CORP), 12 November 1992 (1992-11-12)
• DATABASE WPI Section Ch, Week 9135 Derwent Publications Ltd., London, GB; Class A17, AN 91-257266 XP002057197 & JP 03 168238 A (IDEMITSU PETROCHEM CO), 22 July 1991 (1991-07-22)

**EP 0 838 321 B1**

**Description**

**BACKGROUND OF THE INVENTION**

**1. FIELD OF THE INVENTION**

This invention relates to a soft transparent polyolefin resin sheet and a method for producing the same. The fabricated sheet is used for packaging food, medicines, clothing and so on. Moreover, it can be used for a carrying case, stationery (e.g., a colorful pen case, a case with a fastener), a decorative sheet (used for, e.g., building materials, furniture), a greenhouse cover for agriculture, a case for eyewash, a case for CD-ROM, and so on.

**2. DESCRIPTION OF THE RELATED ART**

A polyvinyl chloride sheet has been generally used as a resin sheet (or film) having flexibility and heat resistance and outstanding in strength. The polyvinyl chloride (PVC) sheet, however, is given due consideration to the environment so that a monomer or a plasticizing agent having poisonousness is bled out during use, or hydrogen chloride or dioxine having poisonousness is produced in an incinerating process.

For the environment, the use of, for example, a polyethylene type or a polypropylene type sheet or film is proposed.

Instances of the polypropylene type sheet or film are shown with, for example, a polypropylene type film using a low-stereoregular polypropylene as the basis (Japanese Patent Laid-open No. Hei7-171849), and a laminated polypropylene type film of a polypropylene layer, a polypropylene-ethylene-butene-1 copolymer layer and a polypropylene layer (Japanese Patent Laid-open No. Hei6-218892).

The polyethylene type sheet has lower transparency, a shine and heat resistance and less body than the polyvinyl chloride sheet.

The polypropylene type sheet is superior to PVC as to the low-temperature heat-sealability and the brittle temperature, is virtually parallel with PVC as to mechanical properties such as rigidity and strength, and is inferior to PVC as to a shine and transparency such as gloss and haze.

A sheet made of polyolefin type resin has environmental friendliness as compared with the polyvinyl chloride sheet, but, on the other hand, it has the difficulty of fusing or fusion cut by means of high-frequency heating for reasons of a small dissipation loss.

The disadvantages in the high-frequency heating can be somewhat rectified by a resin sheet that is fabricated by mixing a polyolefin type resin and an ethylene-vinyl acetate copolymer resin, however, the sheet that is obtained through a conventional touch roll sheet forming method using a cooling roller is inferior in transparency.

EP-A-0803340 forms part of the state of the art under Article 54(3) EPC. This document describes a method and apparatus for producing a thermoplastic resin sheet said to have low total haze and inner haze but high transparency.

EP-A-0246328 describes a transparent polyethylene film having a density of greater than 0.935 g/cm$^3$, a haze value of less than 10% and a surface roughness of 0.001 to 0.15 $\mu$m. The specific examples describe the preparation of films having a Young's modulus ranging from 5100 to 10500 kg/cm$^2$.

EP-A-0482518 discloses a polypropylene sheet said to be excellent in transparency and surface gloss. The sheets described in the specific examples show total haze values of, for instance ranging from 0.9 to 2.3% as measured by JIS K-7105, and surface gloss values ranging from 128 to 132, as measured by JIS K-7105.

**SUMMARY OF THE INVENTION**

A soft transparent polyolefin resin sheet according to the present invention comprises, as a major volume fraction thereof, a non-crystalline resin, the sheet having the following properties (a) to (c).

(a) An elastic modulus in tension ranges from 20 MPa to 1,000 MPa.

When the elastic modulus in tension is smaller than 20 MPa, the sheet has a low degree of body, resulting in the sheet of little value as a matter of practicality. When the elastic modulus in tension is lager than 1,000 MPa, the sheet is harder and the handling qualities is inferior, so that the sheet is inapplicable to the use required. The prefer elastic modulus in tension ranges from 50 MPa to 800 MPa.

(b) An average length of a foreign substance that has a different refractive index from a non-crystalline resin composition occupying the most volume fraction is less than 10 $\mu$m, and the number of foreign substances in any section of the sheet is less than 500 foreign substances/mm$^2$.

A principal factor in loss of transparency in the sheet is the a scattering of incident light caused by the foreign substances. When the average length of the foreign substance is less than 10 $\mu$m and the number of foreign substances in any section of the face of the sheet is less than 500 foreign substances/$mm^2$, the scattering of light caused by the foreign substances can be decreased by a large amount, thereby avoiding the decrease of the transparency of the sheet.

The direction of the section of the face can be selectively determined, for example, a vertical section or a horizontal section with respect to the front face or the back face of the sheet.

The average length is a mean value of the longest and shortest selected sections of the foreign substance, for example, as in the diameter of a sphere.

The reality of the foreign substance is, for example, a crystalline phase included in the same resin as the aforementioned non-crystalline resin phase, a resin differing from the aforementioned non-crystalline resin phase, and an organic material or an inorganic material (such as calcium carbonate, talc) excepting the resin.

The length and the number of foreign substances can be inspected by the following means.

Where the foreign substance is a transparent body having a different refractive index from that of a matrix resin, the foreign substance can be inspected with a phase-contrast microscope through which contrast can be obtained. Additionally, the size can be measured by an small-angle light-scattering method.

Where the foreign substance is the crystalline phase, the foreign substance can be inspected with a polarizing microscope for reasons of optical anisotropy in a coherent configuration of a molecular chain in general.

Where the foreign substance has a molecular structure completely differing from that of a matrix resin, the foreign substance may be inspected with a scanning electron microscope or a transmission electron microscope.

(c) A surface-roughness Ra of at least one of faces of the sheet is less than 0.2 μm.

Another principal factor in loss of transparency in the sheet is reflections of the incident light by the surface of the sheet as well as the scattering of light caused by the foreign substance. More specifically, the proportion that the light reflects is increased by relationship with an angle of incident light when the sheet has asperities on the surface, thereby producing the irregular reflection. The asperities on the surface have a profound effect on the shine. When the surface-roughness is expressed as an average roughness at the center line Ra in quantity, the surface-roughness is defined to be less than 0.2 μm, thereby avoiding the irregular reflection or the decrease of shine. The preferable surface-roughness is less than 0.1 μm, more preferably, less than 0.05 μm.

The surface-roughness can be moderated by a method, such as a polish, coating or scribing of the surface of the sheet.

Incidentally, the sheet of the present invention can be a film that is relatively thinner.

The soft transparent polyolefin resin sheet according to the present invention may be have a multilayered structure, in which at least one of outer faces of the multilayered structure is made of a hard polypropylene type resin.

In the soft transparent polyolefin resin sheet having the multilayered structure, the preferably containing proportion of a soft transparent polyolefin resin is more than 10 wt%. The multilayered structure is formed by, for example, co-extruding.

The outer face is made of a hard polypropylene type resin in order to increase the hardness and to increase a mar-proof property. In addition, the objectives are to improve chemical resistance and transferability as in carbon-copies, printing or the like, and to avoid bleed-out of a soft resin component as a middle layer.

In the soft transparent polyolefin resin sheet, it is desirable that the soft transparent polyolefin resin sheet is formed by a low-stereoregular polypropylene type resin having a ratio of mmmm (a value of PI) ranging from 50 % to 90 % in a pentad ratio measured by using $^{13}$C-NMR with respect to stereoregularity of homo-polypropylene.

The aforementioned mmmm (0000) or (1111) is an isotactic pentad. "m" shows an isotactic yard, "0", "1" show a configuration of an individual monomeric unit along a polymer chain, "0" shows any one of configurations, and "1" shows the opposite configuration.

The value of PI (Pentad Isotacticity) is an isotactic ratio in a pentad unit in a polypropylene molecular chain. A measuring method of the isotactic ratio is reported in "Macromolecules 6925" (1973).

When the value of PI is less than 50 %, the heat resistance and the strength are decreased. When it exceeds 90 %, the resin is harder, thereby rendering it unfit for the intended use as the soft sheet.

The low-stereoregular polypropylene type resin relating to the present invention is produced by the single step gas phase polymerization or the single slurry polymerization (Japanese Patent Laid-open No. Hei3-14851, Japanese Patent Laid-open No. Hei6-263934).

It is advisable that the value of rrrr/(1-mmmm) of the low-stereoregular polypropylene type resin ranges from 15 % to 50 %.

The rrrr is the state of syndiotacticity. The rrrr/(1-mmmm) of less than 15 % renders the resin harder and unfit for the intended use as the soft sheet. The rrrr/(1-mmmm) of more than 50 % causes the heat resistance and the strength to decrease.

It is advisable that the low-stereoregular polypropylene type resin consists of a boiled heptane insoluble polypropylene type resin (from 50 wt% to 95 wt%) having the limiting viscosity ranging from [η]0.5 dl/g to [η]9.0 dl/g, and a boiled heptane soluble polypropylene type resin (from 5 wt% to 50 wt%) having the limiting viscosity of more than [η]1.2 dl/g.

When [η] of a boiled heptane insoluble polypropylene type resin is less than 0.5 dl/g, the chip resistance is extremely decreased, additionally, when it exceeds 9.0 dl/g, the smooth forming process is impossible.

When [η] of a boiled heptane soluble polypropylene type resin is less than 1.2 dl/g, the breaking stress is lower and the rubber elasticity may be inferior.

The aforementioned limiting viscosity is a value that is measured in a decalin solution of 135 °C.

It is advisable that the soft transparent polyolefin resin sheet is formed by an ethylene-propylene random copolymer (ethylene content ranging from 5 wt% to 30 wt%).

It is desirable that the proportion of ethylene-propylene random copolymer that a unit PPEP composed of continued four elements of ethylene (E) and propylene (P) has a racemic configuration for a continued part of PP is extremely small.

The preferably specific proportion is less than 1 %. Thereby improving the flexibility, the tensile strength, the heat resistance and the processability.

The measurement of the proportion can be carried out by, for example, the method referred in page 2208 of the 29th volume of "POLYMER" (1988) and page 138 of the 29th volume of "POLYMER" (1988).

It is desirable that the soft transparent polyolefin resin sheet is formed by a non-crystalline butene-1-propylene copolymer.

It is desirable that the soft transparent polyolefin resin sheet is formed by a compound of a non-crystalline butene-1-propylene copolymer and polypropylene.

It is desirable that the soft transparent polyolefin resin sheet is formed by a propylene-ethylene-butene-1 copolymer.

It is desirable that the soft transparent polyolefin resin sheet is formed by a compound of a propylene-ethylene-butene-1 copolymer and polypropylene.

It is desirable that the soft transparent polyolefin resin sheet contains a reactor blending type ethylene-propylene copolymer elastomer.

It is desirable that the soft transparent polyolefin resin sheet contains a reactor blending type ethylene-propylene-butene-1 copolymer.

It is desirable that the soft transparent polyolefin resin sheet is formed by at least one selected from an ethylene monopolymer and an ethylene-α-olefin copolymer.

It is advisable that the ethylene monopolymer is at least one selected from a high-pressure-produced low-density polyethylene and a low-pressure-produced low-density polyethylene.

It is advisable that the ethylene-α-olefin copolymer is at least one selected from a Ziegler-Natta catalyst type linear low-density polyethylene, a metallocene catalyst type linear low-density polyethylene, and an ethylene-octane copolymer having long branching in a main chain polymerized by using C. G. C. T. (Constrained Geometry Capatlyst Technology).

It is advisable that the outer face of the soft transparent polyolefin resin sheet having the multilayered structure is resin selected from homo-polypropylene, an ethylene-propylene random copolymer (ethylene content ranging from 0.1 wt% to 10 wt%), and an ethylene-butene-propylene random copolymer (ethylene and butene content ranging from 0.1 wt% to 10 wt%).

The soft transparent polyolefin resin sheet according the present invention can include an anti-oxidizing agent, an anti-blocking agent, a sliding agent, a nucleating agent, an antistat, an ultraviolet absorption agent, a weathering agent, an anti-fungus agent, a petroleum resin and so on within the range in which the properties are not inhibited.

A method for producing a soft transparent polyolefin resin sheet uses a producing apparatus having a cooling roller, a metallic endless member abutting through the resin sheet to the cooling roller, and an elastic member placed under a face of the metallic endless member at a place where the resin sheet cooled after the resin sheet is guided between the cooling roller and the metallic endless member, and it is characterized by including the steps of: guiding the soft transparent polyolefin resin sheet according to any one of the first, second and third inventions in the molten state between the cooling roller and the metallic endless member so that the resin sheet simultaneously touches both the cooling roller and the endless member in contact with the cooling roller; and areally pressuring and cooling the soft transparent polyolefin resin sheet while the elastic member is being elastically deformed.

Here, the resin sheet in the molten state is, for example, a resin sheet just after which being extruded from a die of an extruder.

As the materials of the elastic member, a fluorine type rubber, a silicone type rubber, EPDM and so on can be used. The preferable thickness of the elastic member is more than 3 mm in order to obtain a sufficient areal pressure through the elastic deformation.

Preferably, each surface of the metallic endless member and the roller on which the resin sheet is touched is a mirror face, in which, for example, the surface-roughness is less than 0.5 S.

As the materials of the endless member, stainless steel, carbon steel, titanium alloy and so on can be used.

The thickness of the endless member is discretionary, but the preferable thickness is more than 0.3 mm from the viewpoint of the strength.

In the invention, the resin sheet is areally pressured and cooled as the elastic member becomes elastically deformed, so that the efficiency of the cooling and the mirror transfer is enhanced.

The resin sheet is guided between the cooling roller and the metallic endless member to touch both the cooling roller and the metallic endless member in contact with the cooling roller, at approximately the same time, so that the pressuring process and the cooling process for the resin sheet are concurrently carried out, thereby improving the transparency of the resin sheet. If the resin sheet is touched with the metallic endless member or the cooling roller, one earlier than the other, the resin sheet must be cooled and solidified before the mirror face is transferred onto both faces of the sheet.

It is advisable that the metallic endless member is wound on at least two rollers; and the elastic member is formed on the outer circumferential surface of the cooling roller of the rollers wound with the metallic endless member.

In other words, the metallic endless member is a metallic endless belt wound on at least two rollers.

Inside of the metallic endless belt, a cooling roller or a roller for controlling tension can be provided as a roller besides the aforementioned two rollers.

One of the metallic endless member may be wound on the cooling rollers to run with the other metallic endless member in parallel, in which the soft transparent polyolefin resin sheet according to the present invention is guided in the molten state between the metallic endless members so that the resin sheet simultaneously touches both the endless members, and the soft transparent polyolefin resin sheet is areally pressured and cooled while the elastic member is being elastically deformed.

Videlicet the soft transparent polyolefin resin sheet is cooled by being sandwiched between the two metallic endless members.

In the above-described production method, the elastic member can formed on the outer circumferential surface of the roller, and the metallic endless member may cylindrically formed on the outer circumferential surface of the elastic member.

Videlicet the metallic endless member is formed as the outer layer of the roller.

It is advisable that the temperature of the cooling roller and the metallic endless member in direct contact with the resin sheet ranges from the dew point to 50 °C.

When the temperature of the roller and the metallic endless member which are for cooling the resin sheet is lower than the dew point, droplet spots are produced on the sheet. Alternatively, when it exceeds 50 °C, the sufficient transparency cannot be obtained. Therefore, the preferable temperature is less than 30 °C.

It is desirable that the areal pressure when the resin sheet is areally pressured with the elastically deformed elastic member ranges 0.1 MPa to 20.0 MPa.

The areal pressure of lower than 0.1 MPa causes the efficiency of the mirror transfer and the cooling to be decreased. On the other hand, the areal pressure of more than 20.0 MPa causes tension to be increased when the endless belt is used, therefore being unacceptable from the viewpoint of long lasting qualities.

It is desirable that the elastic member has the hardness (adherence to JIS K6301 type) of less than 95 degrees.

When the hardness is more than 95 degrees, the elastic force is decreased and resin banks are easily produced when the resin sheet is touched both the cooling roller and the metallic endless member at approximately the same time.

Another method for producing a soft transparent polyolefin resin sheet comprises using an apparatus having a water tray formed with a slit for flowing a cooling water, a water tank placed under the water tray, and a pair of rollers for pressuring, located to be at least partially soaked in water of the water tank, and is characterized by including the steps of: cooling the soft transparent polyolefin resin sheet according to the present invention in the molten state with the cooling water while the resin sheet is being passed through the slit; and guiding the soft transparent polyolefin resin sheet through between the pair of rollers for pressuring into the water of the water tank.

The preferable temperature of the water for cooling is less than 10 °C. Calcium chloride can be added in the water as necessary.

The obtained resin sheet can undergo an annealing treatment.

The annealing process is carried out, for example, from 80 °C to 130 °C, preferably, 110 °C to 130 °C. The annealing process allows the hardness of the face of the sheet to be increased.

## BRIEF DESCRIPTION OF THE DRAWINGS

Fig. 1 is a diagrammatic view of an apparatus used in producing a soft transparent polyolefin resin sheet according to the present invention;

Fig. 2 is a diagrammatic view of another apparatus used in a producing method of a soft transparent polyolefin resin sheet according to the present invention;

Fig. 3 is a diagrammatic view of another apparatus used in a producing method of a soft transparent polyolefin resin sheet according to the present invention; and

Fig. 4 is a diagrammatic view of another apparatus used in producing a soft transparent polyolefin resin sheet according to the present invention.

## DETAILED DESCRIPTION OF THE PREFERRED EMBODIMENT(S)

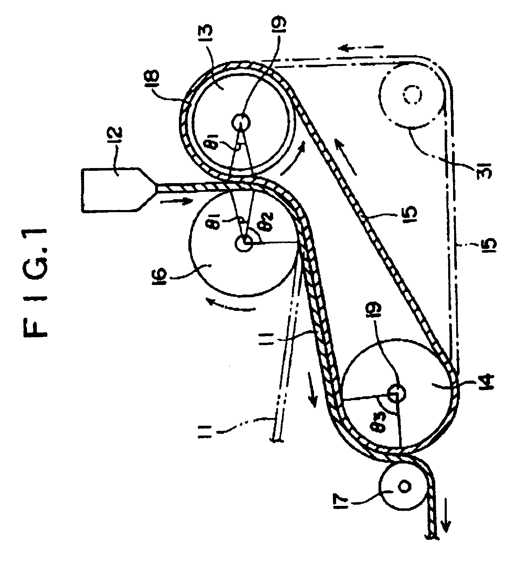

A soft transparent polyolefin resin sheet 11 and a method for producing the same will be described hereinafter with reference to Fig. 1.

At the outset, a structure of a producing apparatus used in the producing method of the embodiment will be explained.

The apparatus is composed of: a T-die 12 of an extruder (not shown); a metallic endless belt 15 wound on a first cooling roller 13 and a second cooling roller 14; a third cooling roller 16 that is in contact with the first cooling roller 13 through the resin sheet 11 and the metallic endless belt 15; and a fourth roller 17 placed adjacent to the second cooling roller 14.

The first cooling roller 13 is covered with an elastic member 18, such as fluoro rubber, on the outer circumference surface. The elastic member 18 has the hardness (adherence to JIS K6301 A-type) of less than 95 degrees and the thickness of more than 3 mm.

The metallic endless belt 15 is made of stainless or the like and has a mirror surface having the surface-roughness of less than 0.5 S.

At least one of rotating shafts 19 of the first and second cooling rollers 13 and 14 is connected with a rotary driving means (not shown).

The third roller 16 also has a mirror surface having the surface-roughness of less than 0.5 S. The third roller 16 is placed to be in contact with the first roller 13 through the resin sheet 11 and the metallic endless belt 15 and to be held by the resin sheet 11 that is pressured toward the cooling roller 16 by the endless belt 15. In other words, the metallic endless belt 15 and the resin sheet 11 laid on the endless belt 15 run in a curve to wind on a part of outer circumferential surface of the third cooling roller 16.

The fourth roller 17 guides the resin sheet 11 to pressure it onto the second cooling roller 14 through the endless belt 15.

The first and third cooling rollers 13 and 16 of the cooling rollers each have a temperature controlling means, such as a water-cooling system (not shown), for controlling the temperature of the surface of the roller. The temperature controlling means is not provided in the cooling roller 14, but may be provided.

As indicated with a dashed and dotted line of Fig. 1, a cooling roller 31 can be placed forward the first cooling roller 13 inside the endless belt 15, thereby the upstream portion of the endless belt 15 is cooled in advance before reaching the first cooling roller 13. Additionally, the cooling roller 31 functions as a roller for controlling tension of the endless belt 15.

Next, the method for producing the soft transparent polyolefin resin sheet with the use of the aforementioned apparatus will be hereinafter described.

Each temperature of the cooling rollers 13, 14 and 16 are controlled to maintain the surface temperature of the third cooling roller 16 and the metallic endless belt 15 that is in directly contact with the resin sheet 11 to be from the dew point to 50 °C.

As the materials of the resin sheet 11 that is fed into the extruder, when a single layer sheet is fabricated, pellet of a soft polypropylene type resin is put in readiness for using. When a multilayered layer sheet is fabricated, pellet of a hard polypropylene type resin is additionally put in readiness for using.

The resin sheet 11 is extruded from the T-die 12 after the materials of the resin sheet 11 is fed into the extruder and meltingly kneaded. The extruded resin sheet 11 is guided between the first and third cooling rollers 13 and 16 to touch both the third cooling roller 16 and the endless belt 15 in contact with the first cooling roller 13. The resin sheet 11 is pressed between the first and third cooling roller 13 and 16 and cooled at less than 50 °C. Here, the elastic member 18 is elastically deformed to be compressed with the pressure force produced between the first and third cooling rollers 13 and 16. Therefore, the resin sheet 11 is areally pressured by the cooling rollers 13 and 16 in angles $\theta 1$ formed from the centers of the cooling roller 16 and the cooling roller 13 having the elastically deformed elastic member 18. The areal pressure is from 0.1 MPa to 20.0 MPa.

Continuously, the resin sheet 11 is cooled at less than 50 °C by being pressured onto the third cooling roller 16 by using the endless belt 15 having the mirror surface. The resin sheet 11, which is pressured onto the third cooling roller 16 by the endless belt 15, holds the third cooling roller 16 at an angle $\theta 2$ formed from the center of the roller 16, so that the resin sheet 11 is areally pressured by the endless belt 15 and the third cooling roller 16 in the area formed by the angle θ2. The areal pressure is from 0.01 MPa to 0.5 MPa.

After that, the resin sheet 11 is moved toward the second cooling roller 14 with the rotation of the endless belt 15 while being laid on the endless belt 15, and cooled at less than 50 °C by being pressured through the endless belt 15 to the second cooling roller 14 so as to fabricate the soft transparent polyolefin resin sheet 11 according to the embodiment. When the fourth roller 17 guides the resin sheet 11 to pressure toward the cooling roller 14, the resin sheet is areally pressured through the endless belt 15 to the cooling roller 14 at an angle θ3 formed from the center of the roller 14. The areal pressure is from 0.01 MPa to 0.5 MPa.

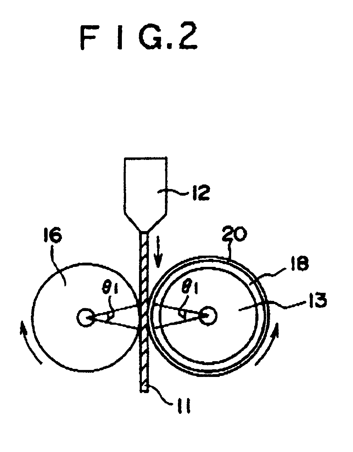

Note that, as indicated with a dashed and two-dotted line of Fig. 1 and Fig. 2, the resin sheet 11 can be peeled from the endless belt 15 just after being cooled by the first and third rollers 13 and 16.

The molten resin sheet 11 that is extruded from the T-die 12 by using a polyolefin type resin as the raw materials is areally pressured and cooled by using the cooling rollers 13 and 16 in the area formed by the angles θ1 of the first and third cooling rollers 13 and 16 in which the elastic member 18 is elastically deformed. Continuously, the resin sheet 11 is areally pressured and cooled by using the metallic endless belt 15 and the third cooling roller 16 at the angle θ2, and additionally, is areally pressured and cooled by using the endless belt 15 and the second cooling roller 14 at the angle θ3 of the second cooling roller 14. Therefore, the obtained resin sheet 11 has the following properties (a) to (c).

(a) An elastic modulus in tension is from 20 MPa to 1,000 MPa.

(b) The average length of a foreign substance that has a different refractive index from a non-crystalline resin composition occupying the most volume fraction is less than 10 μm, and the number of foreign substances in any section of the face of the sheet is less than 500 foreign substances/mm$^2$.

(c) The surface-roughness Ra of at least one of faces is less than 0.2 μm.

A soft transparent polyolefin resin sheet 11 and a producing method of the same according to the embodiment will be described hereinafter with reference to Fig. 2.

A producing apparatus used in the embodiment uses a metallic endless layer 20 that is formed on the outer circumferential of elastic member 18 of the first cooling roller 13 instead of the metallic endless belt 15 which is wound on the first cooling roller 13 and the second cooling roller 14 in the first embodiment.

In the producing method using the producing apparatus of the embodiment, the molten resin sheet 11 which is extruded from the T-die 12 with the use of a polyolefin type resin as the raw materials is areally pressured and cooled by using the cooling rollers 13 and 16 in an area formed by angles θ1 of the first and third cooling rollers 13 and 16 in which the elastic member 18 is elastically deformed. Thereby obtaining the resin sheet 11 having the aforementioned properties (a) to (c).

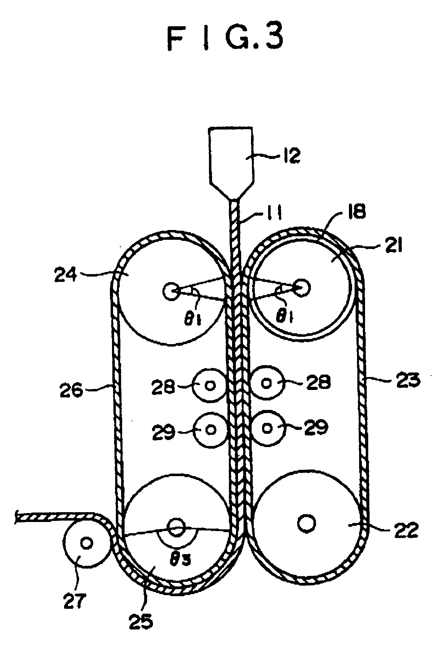

A soft transparent polyolefin resin sheet 11 and a method for producing the same according to the embodiment will be described hereinafter with reference to Fig. 3.

At the outset, a structure of a producing apparatus used in the embodiment will be explained below.

The producing apparatus is composed of: the T-die 12 of the extruder; a first metallic endless belt 23 which is wound on a first cooling roller 21 and a second cooling roller 22; a second metallic endless belt 26 which is wound on a third cooling roller 24 and a fourth cooling roller 25; a fifth roller 27 which is placed adjacent to the fourth cooling roller 25; and two pairs of rollers 28 and 29 placed as a pressure applying means for pressuring the endless belts 23 and 26.

The first cooling roller 21 is covered with the elastic member 18, such as fluoro rubber, on the surface. The elastic member 18 has the hardness (adherence to JIS K6301 A-type) of less than 95 degrees and the thickness of more than 3 mm.

The first and second endless belts 23 and 26 parallel run to sandwich the soft transparent polyolefin resin sheet 11 in between the first and second cooling rollers 21 and 22 and between the third and fourth cooling rollers 24 and 25. The endless belts 23 and 26 are made of stainless or the like and have a mirror surface having the surface-roughness of less than 0.5 S.

Each pair of rollers 28 and 29 as the pressure applying means, are with the endless belts 23 and 26 in between, and are located in the middle section from the first and third cooling rollers 21 and 24 to the second and fourth cooling rollers 22 and 25. The upper pair of rollers 28 and the lower pair of rollers 29 are spaced to some degree from each other. Each pair of rollers 28 and 29 can be placed in a zigzag not to be opposite to each other.

The fifth roller 27 guides the soft transparent polyolefin resin sheet 11 so that the resin sheet 11 is pressured through the second endless belt 26 to the fourth cooling roller 25.

Each of the cooling rollers 21, 22, 24 and 25 has a temperature controlling means, such as a water-cooling system (not shown), for controlling the temperature of the surface of the roller.

Next, the method for producing the soft transparent polyolefin resin sheet 11 of the embodiment by using the aforementioned producing apparatus will be explained below.

Each temperature of the cooling rollers 21, 22, 24 and 25 are controlled so that each surface temperature of the metallic endless belts 23 and 26 that is in directly contact with the resin sheet 11 is maintained from the dew point to 50 °C.

The soft transparent polyolefin resin sheet 11 which is extruded from the T-die 12 is guided between the first and second endless belts 23 and 26 to touch both the first metallic endless belt 23, which is directly laid on the first cooling roller 21, and the second metallic endless belt 26 which is directly laid on the third cooling roller 24. The soft transparent polyolefin resin sheet 11 is pressured by the first and third cooling rollers 21 and 24 and cooled at less than 50 °C. Here, the elastic member 18 is elastically deformed to be compressed with the pressure force produced between the first and third cooling rollers 21 and 24. Therefore, the resin sheet 11 is areally pressured by the cooling rollers 21 and 24 in angles θ1 formed from the centers of the cooling roller 24 and the cooling roller 21 having the elastically deformed elastic member 18. The areal pressure is from 0.1 MPa to 20.0 MPa.

Continuously, the soft transparent polyolefin resin sheet 11 that is sandwiched between the endless belts 23 and 26 by using two pairs of rollers 28 and 29 as the pressure applying means is pressured and cooled at less than 50 °C while being parallel run together with the endless belts 23 and 26. The resin sheet 11 that is sandwiched between the endless belts 23 and 26 in a section between the upper and lower pairs of rollers 28 and 29 is areally pressured by the pressure force of the pairs of rollers 28 and 29. The areal pressure is from 0.01 MPa to 0.5 MPa.

After that, the soft transparent polyolefin resin sheet 11 is moved toward the second and fourth cooling rollers 22 and 25 with the rotation of the endless belts 23 and 26, and cooled at less than 50 °C by being pressured through the second endless belt 26 toward the fourth cooling roller 25. The polyolefin resin sheet 11 which is guided by the fifth roller 27 to be pressured toward the fourth cooling roller 25 is areally pressured onto the endless belt 26 in a section formed by an angle θ3 from the center of the cooling roller 25. The areal pressure is from 0.01 MPa to 0.5 MPa.

According to the embodiment, the processes for areally pressuring and cooling the resin sheet 11 are carried out in the section formed by the angles θ1 of the third cooling roller 24 and the first cooling roller 21, having the elastically deformed elastic member 18, by the first and third cooling roller 21 and 24 and the endless belts 23 and 26, continuously, between the two pairs of rollers 28 and 29 as the pressure applying means, and further, in the section formed by the angle θ3 by the second metallic endless belt 26 and the fourth cooling roller 25. Thereby obtaining the resin sheet 11 having the aforementioned properties (a) to (c).

Another method for producing the a transparent polyolefin resin sheet 11 is described, with reference to Figure 1. As the raw materials of the resin sheet 11 which are fed into the extruder are a pellet that consists of a soft polypropylene type resin and pellet that is made by adding one of three components of a hydrogenated SBR, an ethylene-αolefin copolymer and an ethylene-octane copolymer in the soft polypropylene type resin are put in readiness for using.

The resin sheet 11, which is manufactured of the materials of the soft polypropylene type resin or the material that is compounded of the resin and one of three components of a hydrogenated SBR, an ethylene-αolefin copolymer and an ethylene-octane copolymer, and is extruded from the T-die 12, is areally pressured and cooled with the cooling rollers 13 and 16 in the section formed by the angle θ1 of the cooling roller 16 and the cooling roller 13 having the elastically deformed elastic member 18. Continuously, the sheet 11 is areally pressured and cooled in the angle θ2 by using the metallic endless belt 15 and the third cooling roller 16. Additionally, after that, the sheet 11 is areally pressured and cooled in the angle θ3 of the second cooling roller 14 by using the endless belt 15 and the second cooling roller 14. Thereby fabricating the resin sheet 11 having the high transparency at high speed.

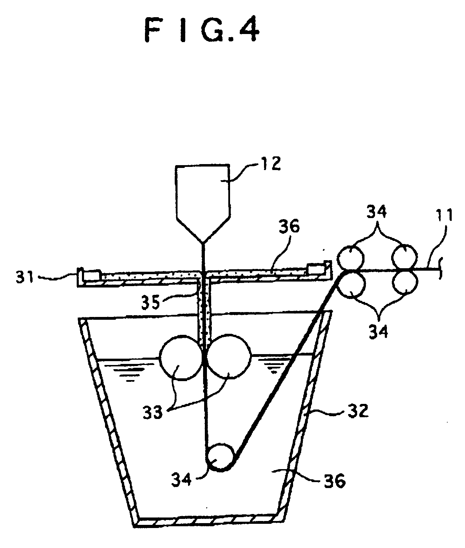

Another method for producing a soft transparent polyolefin resin sheet 11 is described hereinafter with reference to Fig. 4.

The first description is as to a structure of an apparatus used in the method.

The apparatus is composed of: the T-die 12 of the extruder; a water tray 31; a water tank 32 that is placed downward the water tray 31; and a pair of rollers 33 for pressuring the sheet, which is placed in the water tank 32. Guiding rollers 34 for guiding the resin sheet are placed in the water tank 32 and in proximity to the water tank 32.

The water tray 31 is formed with a slit 35 for flowing the cooling water at the center thereof. The length of the slit 35 is slightly longer than the width of the resin sheet 11.

The paired rollers 33 is placed to be opposite each other. A space between the two rollers 33 is located under the slit 35. The approximately half of the paired rollers 33 are soaked in water 36 in the water tank 32.

The soft transparent polyolefin resin sheet 11 is fabricated by using the above apparatus as described hereinafter.

The soft transparent polyolefin resin sheet 11 which is extruded from the T-die 12 of the extruder is cooled by the water 36 for cooling while being passed through the slit 35.

Continuously, the resin sheet 11 is guided from between the pair of rollers 33 for pressing the sheet into the water 36 of the water tank 32, and is drawn up out of the water tank 32 through the guiding rollers 34.

The resin sheets 11 obtained can undergo an annealing treatment. The annealing treatment is carried out by using a heating roller or a belt that is wound on a heating roller. The heating roller or the number of heating rollers for the belt can be selectively decided.

The resin sheet 11 is heated and the resin sheet 11 in the molten state can undergo a similar process to that described in relation to Figure 1.

Experiments 1 to 17

The resin sheet 11 is fabricated by changing specific examples and the compounding proportions of the raw materials of the sheet from each experiment.

The resin sheets 11 relating to Experiments 1 to 8 have a single layer structure. Table 1 shows in reference to the aforementioned properties (a) to (c) of each resin sheet 11 of Experiments.

Diameter of the extruder ... 90 mm, width of the T-die ... 800 mm.

Materials of the elastic member ... silicone rubber, thickness ... 10 mm, hardness ... 30 degrees.

Processing speed of the sheet ... 16 m/min..

Surface temperature of the roller and the endless belt that is on contact with the sheet ... 20 °C.

Soft polyolefin type resin of Experiment 1 ... a low-stereoregular homo-polypropylene (MI: 3.1 g/10min., density: 0.90 g/m$^3$, an elastic modulus in tension: 500 MPa, PI: 76 %, rrrr/(1-mmmm): 24.2 %, boiled heptane insolubles: 90 wt%). TPO E-2900 (trade name) made by Idemitsu Petrochemical Co., Ltd.. The thickness of the sheet ... 0.2 mm.

Soft polyolefin type resin of Experiment 2 ... multiple polymerization reactor is used for a compounding process. An ethylene-propylene copolymer (MI: 0.84 g/10min., density: 0.89 g/cm$^3$, an elastic modulus in tension: 150 MPa), having a form in which a component of an ethylene-propylene rubber (EPR) of approximately 43 wt% is evenly fine-dispersed. CATALLOY KS-082P (trade name) made by HIMONT Inc.. The thickness of the sheet ... 0.3 mm.

Soft polyolefin type resin of Experiment 3 ... multiple polymerization reactor is used for a compounding process. An ethylene-propylene copolymer (MI: 0.60 g/10min., density: 0.89 g/cm$^3$, an elastic modulus in tension: 100 MPa), having a form in which a component of EPR of approximately 50 wt% is evenly fine-dispersed. CATALLOY KS-052P (trade name) made by HIMONT Inc.. The thickness of the sheet ... 0.3 mm.

Soft polyolefin type resin of Experiment 4 ... an ethylene-propylene random copolymer (MI: 1.50 g/10min., density: 0.88 g/cm$^3$, an elastic modulus in tension: 100 MPa), in which a soft segment and a hard segment are produced from ethylene of 20 wt% and propylene of 80 wt% by using a single-stage reactor. PER T-310E (trade name) made by TOKUYAMA Corp.. The thickness of the sheet ... 0.2 mm.

Soft polyolefin type resin of Experiment 5 ... an ethylene-propylene random copolymer (MI: 1.50 g/10min., density: 0.88 g/cm$^3$, an elastic modulus in tension: 120 MPa), that is compounded from ethylene of 10 wt% and propylene of 90 wt% as in Experiment 4. PER T-310J (trade name) made by TOKUYAMA Corp.. The thickness of the sheet ... 0.2 mm.

Soft polyolefin type resin of Experiment 6 ... a resin composition which a low-stereoregular homo-polypropylene, as used in Experiment 1, of 70 wt% and a hydrogenated styrene-butadiene rubber (trade name: DYNALON 1320P made by Japan Synthetic Rubber Co., Ltd.) of 30 wt% are blended. The thickness of the sheet ... 0.3 mm.

Soft polyolefin type resin of Experiment 7 ... a resin composition which a low-stereoregular homo-polypropylene, as used in Experiment 1, of 80 wt% and an ethylene-propylene rubber (EPR) (trade name: TAFMER P0280 made by MITSUI CHEMICAL CO., LTD.) of 20 wt% are blended. The thickness of the sheet ... 0.3 mm.

Soft polyolefin type resin of Experiment 8 ... a resin composition which a low-stereoregular homo-polypropylene, as used in Experiment 1, of 85 wt% and an ethylene-octane copolymer (trade name: ENGAGE EG-8200 made by DOW CHEMICAL Company) of 15 wt% are blended. The thickness of the sheet ... 0.3 mm.

The resin sheets 11 relating to Experiments 9 to 11 have a double layer structure.

Soft polyolefin type resin of one layer of the sheet relating to Experiment 9 ... a low-pressure-produced linear low-density polyethylene (L-LDPE, MI: 3 g/10min., density: 0.907 g/cm$^3$). MORETEC V-0398CN (trade name) made by Idemitsu Petrochemical Co., Ltd.. The thickness ... 120 μm.

Resin of the other layer of the sheet in Experiment 9 ... a hard polypropylene type resin. F-704NP (trade name) made by Idemitsu Petrochemical Co., Ltd.. The thickness ... 80 μm.

Soft polyolefin type resin of one layer of the sheet relating to Experiment 10 ... an ethylene-octane copolymer (MI: 1 g/10min., density: 0.902 g/cm$^3$) that has long branching in a main chain which is polymerized by using C. G. C. T. (Constrained Geometry Capatlyst Technology). PLASTOMER AFFINITY PL1880 (trade name) made by DOW CHEMICAL Company. The thickness ... 120 μm.

Resin of the other layer of the sheet relating to Experiment 10 ... a hard polypropylene type resin. F-704NP (trade name) made by Idemitsu Petrochemical Co., Ltd.. The thickness ... 80 μm.

Soft polyolefin type resin of one layer of the sheet relating to Experiment 11 ... an ethylene-octane copolymer (MI: 1 g/10min., density: 0.902 g/cm$^3$) that has long branching in a main chain which is polymerized by using C. G. C. T.. PLASTOMER AFFINITY PL1880 (trade name) made by DOW CHEMICAL Company. The thickness ...160 μm.

Resin of the other layer of the sheet relating in Experiment 11 ... a hard polypropylene type resin. F-704NP (trade name) made by Idemitsu Petrochemical Co., Ltd.. The thickness ... 40 μm.

The resin sheets 11 relating to Experiments 12 to 17 have a three-layer structure.

Soft polyolefin type resin used for each middle layer of the sheet relating to Experiments 12 to 14 ... a resin composition (an elastic modulus in tension: 100 MPa) that is compounded by blending an amorphous polyolefin (density: 0.86 g/cm$^3$, melting viscosity in 190 °C; 10,000 cps) of 50 wt%, compounded by means of a random copolymerization of butene-1 (35 wt%) and propylene (65 wt%), and a crystalline polypropylene (MI: 1.00 g/10min., density: 0.90 g/cm$^3$) of 50 wt%. CAP-355 (trade name) made by UBE REXSEN CO., LTD.. The thickness of the middle layer ... 0.16 mm.

Resin used for the outer layers of each sheet relating to Experiments 12 to 14 ... a hard polypropylene type resin. F-704NP (trade name) made by Idemitsu Petrochemical Co., Ltd.. The thickness of the outer layer ... 0.02 mm.

Soft polyolefin type resin used for a middle layer of the sheet relating to Experiment 15 ... a high-pressure-produced low-density polyethylene (LDPE, MI: 4 g/10min., density: 0.921 g/cm$^3$). PETROTHEN 190 (trade name) made by TOHSO Corporation. The thickness of the middle layer ... 0.16 mm.

Resin used for the outer layers of the sheet relating to Experiment 15 ... random polypropylene (an ethylene-propylene random copolymer, ethylene content: 4 wt%, MI: 11 g/10min.). GRAND POLYPRO S235 (trade name) made by GRAND POLYMER CO., LTD.. The thickness of the outer layer ... 0.02 mm.

Soft polyolefin type resin used for a middle layer of the sheet relating to Experiment 16 ... a low-pressure-produced linear low-density polyethylene (L-LDPE, MI: 3 g/10min., density: 0.907 g/cm$^3$). MORETEC V-0398CN (trade name) made by Idemitsu Petrochemical Co., Ltd.. The thickness of the middle layer ... 0.16 mm.

Resin used for the outer layers of the sheet relating to Experiment 16 ... random polypropylene (an ethylene-propylene random copolymer, ethylene content: 4 wt%, MI: 11 g/10min.). GRAND POLYPRO S235 (trade name) made by GRAND POLYMER CO., LTD.. The thickness of the outer layer ... 0.02 mm.

Soft polyolefin type resin used for a middle layer of the sheet relating to Experiment 17 ... an ethylene-octane copolymer (MI: 1 g/10min., density: 0.902 g/cm$^3$) that has long branching in a main chain which is polymerized by using a metallocene catalyst type geometrical restraint catalyst. PLASTOMER AFFINITY PL1880 (trade name) made by DOW CHEMICAL Company. The thickness of the middle layer ... 0.16 mm.

Resin used for the outer layers of the sheet relating to Experiment 17 ... random polypropylene (an ethylene-propylene random copolymer, ethylene content: 4 wt%, MI: 7 g/10min.). F-744NP (trade name) made by Idemistu Petrochemical Co., Ltd.. The thickness of the outer layer ... 0.02 mm.

Comparisons 1 and 2

A resin sheet is produced by a conventional touch roll sheet forming method using a cooling roller. The temperature of the cooling roller is 40 °C.

In Comparison 1, the raw materials of resin is the same as that in Experiment 1.

In Comparison 2, the same three-layer structure as Experiment 15 is used and the raw materials of resin is the same as that in Experiment 15.

Evaluations concerning properties

The resin sheets, obtained in Experiments 1 to 17 and Comparisons 1 and 2, are measured about an average length (size) of a foreign substance, the surface-roughness, haze (total haze/inner haze), gloss, and an elastic modulus in tension. The results are shown in Tables 1 and 2. The number of foreign substances ranges from 100 to 400 pieces of a foreign substance in each of Experiments 1 to 14.

The average length of the foreign substance ranges from 1 μm to 5 μm in each of Experiments 1 to 14. The average length is measured by using a phase-contrast microscope.

The surface-roughness is measured in conformity with JIS B 0610-1982. With the use of an electronic line tridimensional roughness-analysis equipment (trade name: ERA-4000) made by ELIONIX CO., LTD. as a measuring equipment, an image is inspected at 1,500 times. Additionally, an average roughness at the central face Ra is calculated through measuring microscopic asperities on a sample surface by using an electronic probe. The measurement is carried out for the inside face and the outside face of the sheet that is wound on a roller.

The haze is found from the following formula by using the ratio of a total light transmittance (Tt), showing the amount of transmitting light when light is irradiated onto and passes through the sheet, to a diffuse light transmittance (Td) in which light transmits to be diffused by the sheet, with the use of a haze measuring instrument (e.g., trade name: NDH-300A made by NIPPON DENSHOKU KOUGYO CO., LTD.). The total light transmittance is the sum of the diffuse light transmittance (Td) and a parallel light transmittance (Tp) in which light transmits along the same axial as incident light.

$$\text{Haze (H)} = \text{Td/Tt} \times 100$$

The total haze is found from Tt and Td obtained when light is irradiated onto the sheet. The inner haze is measured to eliminate influences from the outside of the sheet by sandwiching the sheet between glass plates after silicone oil is coated on both faces of the sheet.

$$\text{Total haze} = \text{inner haze} + \text{outer haze}$$

The gloss is found from the following formula by using a ratio of a reflected light beam ψs, that is measured when light is irradiated onto the sheet at the incident angle of 60 degrees and a reflected light is also received at 60 degrees, to a reflected light beam ψos that is reflected from the surface of glass having a refractive index of 1.567, with the use of an automatic colorimetric color-difference meter (e.g., trade name: AUD-CH-model 2-45,60 made by SUGA SHIKENKI CO., LTD.).

$$\text{Gloss (Gs)} = (\text{ψs/ψos}) \times 100$$

The elastic modulus in tension is measured in conformity with JIS K-7113.

Table 1

| | | Composition & layer structure of sheet | Elastic modulus in tension (MPa) | Size of foreign substance (μm) | Surface-Roughness (μm) | | Haze (%) | | Gloss (%) |
|---|---|---|---|---|---|---|---|---|---|
| | | | | | inner | outer | total | inner | |
| E1 | | low-stereoregular PP | 500 | < 10 | 0.027 | 0.031 | 2.5 | 1.5 | 135 |
| E2 | | EPR fine-dispersion E-P copolymer | 150 | < 10 | 0.028 | 0.035 | 6 | 3 | 110 |
| E3 | | EPR fine-dispersion E-P copolymer | 100 | < 10 | 0.032 | 0.034 | 5 | 2 | 100 |
| E4 | | E-P random copolymer | 100 | < 10 | 0.039 | 0.038 | 5 | 2.5 | 110 |
| E5 | | E-P random copolymer | 120 | < 10 | 0.042 | 0.034 | 3 | 1.5 | 120 |
| E6 | | low-stereoregular PP / hydrogenated SBR | 150 | < 10 | 0.029 | 0.033 | 2 | 1 | 130 |
| E7 | | low-stereoregular PP / E-O | 450 | < 10 | 0.027 | 0.034 | 3.5 | 1.5 | 120 |
| E8 | | low-stereoregular PP / E-O | 400 | < 10 | 0.033 | 0.041 | 2 | 1.5 | 130 |
| E9 | | PP // L-LDPE | 120 | < 10 | 0.033 | 0.032 | 3 | 1.5 | 120 |
| E10 | | PP // Plastomer | 130 | < 10 | 0.021 | 0.037 | 4 | 2 | 120 |

Table 1   (continued)

| | | Composition & layer structure of sheet | Elastic modulus in tension (MPa) | Size of foreign substance (µm) | Surface-Roughness (µm) | | Haze (%) | | Gloss (%) |
|---|---|---|---|---|---|---|---|---|---|
| | | | | | inner | outer | total | inner | |
| E11 | | PP // Plastomer | 100 | < 10 | 0.034 | 0.031 | 4 | 1.5 | 130 |
| E12 | | PP//amorphous PO//PP | 120 | < 10 | 0.041 | 0.035 | 1 | 0.2 | 130 |
| E13 | | PP//amorphous PO//PP | 200 | < 10 | 0.027 | 0.034 | 0.8 | 0.5 | 130 |
| E14 | | PP//amorphous PO//PP | 200 | < 10 | 0.034 | 0.032 | 0.7 | 0.5 | 130 |
| E15 | | PP // LDPE // PP | 200 | < 10 | 0.035 | 0.037 | 6 | 3 | 120 |
| E16 | | PP // L-LDPE // PP | 120 | < 10 | 0.036 | 0.034 | 4 | 1.6 | 120 |
| E17 | | PP // Plastomer // PP | 100 | < 10 | 0.039 | 0.031 | 3 | 1.7 | 130 |

E1 to E17 are Experiments 1 to 17.
PP is polypropylene.
EPR is ethylene-propylene rubber.
E-P is ethylene-propylene.
PO is polyolefin.
SBR is styrene-butadiene rubber.
E-O is ethylene-octane.

Table 2

| | | Composition & layer structure of sheet | Elastic modulus in tension (MPa) | Size of foreign substance (µm) | Surface-Roughness (µm) | | Haze (%) | | Gloss (%) |
|---|---|---|---|---|---|---|---|---|---|
| | | | | | inner | outer | total | inner | |
| C1 | | low-stereoregular PP | 700 | 15 | 0.26 | 0.27 | 10 | 8 | 80 |
| C2 | | PP//amorphous PO//PP | 150 | 20 | 0.074 | 0.075 | 10 | 1 | 95 |

C1 and C2 are Comparisons 1 and 2.

From Table 1, according to the soft transparent polyolefin resin sheets 11 of Experiments 1 to 8, the sheet is made of a soft polyolefin type resin having the aforementioned properties (a) to (c), so that the sufficient transparency can be obtained by reason of the lower total haze and inner haze. Additionally, an appropriate shine can be obtained by reason of the high gloss.

According to the soft transparent polyolefin resin sheets 11 of Experiments 9 to 17, it is concluded that the effective properties can be similarly obtained even in the multilayered structure in which at least one of both the outer faces is made of a hard polypropylene type resin.

From Table 2, according to Comparison 1, the total haze and the inner haze are higher, so that the obtained resin sheet is inferior in the transparency. Additionally, a shine is low grade by reason of the lower gloss.

According to Comparison 2, the transparency of the obtained resin sheet results being less than adequate for the higher total haze. Additionally, a shine is dull by reason of the lower gloss.

Experiments 18 to 21

The resin sheet 11 is fabricated to change specific examples and the compounding proportions of the raw materials of the sheet, and so on in each experiment as described hereinafter. The resin sheets 11 relating to Experiments 18 to 21 each have a three-layer structure. Table 3 shows the aforementioned properties (a) to (c) which are shown in the resin sheet 11 obtained in each experiment. The specific conditions for producing are the same as in Experiment 1.

The resin used for the middle layer and the outer layers of Experiment 18 is as is the case with Experiment 12.

The resin used for the middle layer and the outer layers of Experiment 19 is as is the case with Experiment 15.

The resin used for the middle layer and the outer layers of Experiment 20 is as is the case with Experiment 16.

The resin used for the middle layer and the outer layers of Experiment 21 is as the case of Experiment 17.

Comparisons 3 and 4

The resin sheet is made by the same manner as the Comparison 1.

The structure of the resin sheet and the composition of resin relating to Comparisons 3 and 4 are the same as that in Comparisons 1 and 2.

Evaluations concerning properties

As regards the resin sheets obtained in Experiments 18 to 21 and Comparisons 3 and 4, the average length of the foreign substance, the surface-roughness, haze, gloss, and the elastic modulus in tension are measured. The results are shown in Tables 3 and 4. The number of foreign substances is sighted in a range from 100 to 400 foreign substances in each of Experiments 18 to 21.

The average length of the foreign substance ranges from 1 μm to 5 μm in each of Experiments 18 to 21.

Table 3

| | | Composition & layer structure of sheet | Elastic modulus in tension (MPa) | Size of foreign substance (μm) | Surface-Roughness (μm) | | Haze (%) | | Gloss (%) |
|---|---|---|---|---|---|---|---|---|---|
| | | | | | inner | outer | total | inner | |
| E18 | | PP//amorphous PO//PP | 130 | < 10 | 0.031 | 0.039 | 2 | 1.5 | 130 |
| E19 | | PP // LDPE // PP | 190 | < 10 | 0.028 | 0.034 | 5 | 3 | 120 |
| E20 | | PP // L-LDPE // PP | 120 | < 10 | 0.032 | 0.034 | 4 | 1.5 | 120 |
| E21 | | PP // Plastomer // PP | 100 | < 10 | 0.041 | 0.032 | 3 | 1.3 | 130 |

Table 4

| | Composition & layer structure of sheet | Elastic modulus in tension (MPa) | Size of foreign substance (μm) | Surface-Roughness (μm) | | Haze (%) | | Gloss (%) |
|---|---|---|---|---|---|---|---|---|
| | | | | inner | outer | total | inner | |
| C3 | low-stereoregular PP | 700 | 15 | 0.3 | 0.031 | 10 | 8 | 90 |
| C4 | PP//amorphous PO//PP | 200 | 18 | 0.081 | 0.081 | 10 | 1 | 95 |

From Table 3, according to the soft transparent polyolefin resin sheets 11 having the three-layer structure of Experiments 18 to 21, the sheet is made of a soft polyolefin type resin having the aforementioned properties (a) to (c), so that the total haze and the inner haze are lower, resulting in the sufficient transparency. Additionally, the higher gloss effects an appropriate shine.

From Table 4, according to Comparison 3, the resin sheet, which is made by using the same raw materials as in Experiment 18 but by the touch roll sheet forming method, has the average length of the foreign substance and the surface-roughness that exceed the range defined in the present invention, so that the transparency results in low grade by reason of the higher total haze and the higher inner haze. Additionally, it is concluded that the shine is inferior for the lower gloss.

According to Comparison 4, the resin sheet that is made by the touch roll sheet forming method has the average length of the foreign substance and the surface-roughness that exceed the range defined in the present invention, so that the transparency results in being inferior by reason of the higher total haze. Additionally, it is concluded that the shine is dull for the lower gloss.

Experiments 22 to 25

The resin sheet 11 is fabricated to change specific examples and the compounding proportions of the raw materials of the sheet, and so on in each experiment as described hereinafter. The resin sheets 11 relating to Experiments 22 to 25 each have a three-layer structure. Table 5 shows the aforementioned properties (a) to (c) which are shown in the resin sheet 11 obtained in each experiment. The specific conditions for producing are the same as in Experiment 1.

The resin used for the middle layer and the outer layers of Experiment 22 is as is the case with Experiment 12.

The resin used for the middle layer and the outer layers of Experiment 23 is as is the case with Experiment 15.

The resin used for the middle layer and the outer layers of Experiment 24 is as is the case with Experiment 16.

The resin used for the middle layer and the outer layers of Experiment 25 is as the case of Experiment 17.

Comparisons 5 and 6

The resin sheet is made by the same manner as the Comparison 1.

The structure of the resin sheet and the composition of resin relating to Comparisons 5 and 6 are the same as that in Comparisons 1 and 2.

Evaluations concerning properties

As regards the resin sheets obtained in Experiments 22 to 25 and Comparisons 5 and 6, the average length of the foreign substance, the surface-roughness, haze, gloss, and the elastic modulus in tension are measured. The results are shown in Tables 5 and 6.

The number of foreign substances is sighted in a range from 100 to 400 foreign substances in each of Experiments 22 to 25.

The average length of the foreign substance ranges from 1 µm to 5 µm in each of Experiments 22 to 25.

Table 5

| | Composition & layer structure of sheet | Elastic modulus in tension (MPa) | Size of foreign substance (µm) | Surface-Roughness (µm) | | Haze (%) | | Gloss (%) |
|---|---|---|---|---|---|---|---|---|
| | | | | inner | outer | total | inner | |
| E22 | PP//amorphous PO//PP | 120 | < 10 | 0.038 | 0.041 | 2 | 1.5 | 130 |
| E23 | PP // LDPE // PP | 180 | < 10 | 0.032 | 0.027 | 5 | 3 | 120 |
| E24 | PP // L-LDPE // PP | 120 | < 10 | 0.033 | 0.035 | 4 | 1.5 | 120 |
| E25 | PP // Plastomer // PP | 100 | < 10 | 0.031 | 0.032 | 3 | 1.3 | 130 |

Table 6

| | | Composition & layer structure of sheet | Elastic modulus in tension (MPa) | Size of foreign substance (µm) | Surface-Roughness (µm) | | Haze (%) | |
|---|---|---|---|---|---|---|---|---|
| | | | | | inner | outer | total | inner |
| C5 | | low-stereoregular PP | 700 | 15 | 0.35 | 0.031 | 10 | 8 |
| C6 | | PP//amorphous PO//PP | 200 | 18 | 0.091 | 0.09 | 10 | 1 |

From Table 5, according to the soft transparent polyolefin resin sheets 11 having the three-layer structure of Experiments 22 to 25, the sheet is made of a soft polyolefin type resin having the aforementioned properties (a) to (c), so that the total haze and the inner haze are lower, resulting in the decent transparency. Additionally, the higher gloss effects an appropriate shine.

From Table 6, according to Comparison 5, the obtained resin sheet has the higher total haze and the higher inner haze, resulting in the inferior transparency. Additionally, the gloss is low, therefore, naturally the shine is inferior.

According to Comparison 6, the obtained resin sheet has the low grade transparency by reason of the higher toatal haze. Additionally, the shine is inferior for the lower gloss.

Experiments 26 to 34

The resin sheet 11 is fabricated by changing specific examples and the compounding proportions of the raw materials of the sheet, and so on in each experiment as described hereinafter. Table 7 shows the aforementioned properties (a) to (c) which are shown in the resin sheet 11 obtained in each experiment. The specific conditions for producing are the same as in Experiment 1.

The resin sheets 11 relating to Experiments 26 to 33 have a single-layer structure.

Soft polypropylene type resin of Experiment 26 ... a low-stereoregular homo-polypropylene (MI: 3.1 g/10min., density: 0.90 g/m$^3$, an elastic modulus in tension: 500 MPa, boiled heptane insolubles: 90 wt%). TPO E-2900 (trade name) made by Idemitsu Petrochemical Co., Ltd.. The thickness of the sheet ... 0.2 mm.

Soft polypropylene type resin of Experiment 27 ... multiple polymerization reactor is used for a compounding process. An ethylene-propylene copolymer (MI: 0.84 g/10min., density: 0.89 g/cm$^3$, an elastic modulus in tension: 150 MPa), having a form in which a component of an ethylene-propylene rubber (EPR) of approximately 43 wt% is evenly fine-dispersed. CATALLOY KS-082P (trade name) made by HIMONT Inc..

Soft polypropylene type resin of Experiment 28 ... multiple polymerization reactor is used for a compounding process. An ethylene-propylene copolymer (MI: 0.60 g/10min., density: 0.89 g/cm$^3$, an elastic modulus in tension: 100 MPa), having a form in which a component of EPR of approximately 50 wt% is evenly fine-dispersed. CATALLOY KS-052P (trade name) made by HIMONT Inc..

Soft polypropylene type resin of Experiment 29 ... an ethylene-propylene random copolymer (MI: 1.50 g/10min., density: 0.88 g/cm$^3$, an elastic modulus in tension: 100 MPa), in which a soft segment and a hard segment are produced from ethylene of 20 wt% and propylene of 80 wt% by using a single-stage reactor. PER T-310E (trade name) made by TOKUYAMA Corp..

Soft polypropylene type resin of Experiment 30 ... an ethylene-propylene random copolymer (MI: 1.50 g/10min., density: 0.88 g/cm$^3$, an elastic modulus in tension: 120 MPa), that is compounded from ethylene of 10 wt% and propylene of 90 wt% as in Experiment 18. PER T-310J (trade name) made by TOKUYAMA Corp..

Soft polypropylene type resin of Experiment 31 ... a resin composition in which a low-stereoregular homo-polypropylene, as used in Experiment 1, of 70 wt% and a hydrogenated styrene-butadiene rubber (trade name: DYNALON 1320P made by Japan Synthetic Rubber Co., Ltd.) of 30 wt% are blended.

Soft polypropylene type resin of Experiment 32 ... a resin composition in which a low-stereoregular homo-polypropylene, as used in Experiment 26, of 80 wt% and an ethylene-propylene rubber (EPR) (trade name: TAFMER P0280 made by MITSUI CHEMICAL CO., LTD.) of 20 wt% are blended.

Soft polypropylene type resin of Experiment 33 ... a resin composition in which a low-stereoregular homo-polypropylene, as used in Experiment 15, of 85 wt% and an ethylene-octane copolymer (trade name: ENGAGE EG-8200 made by DOW CHEMICAL Company) of 15 wt% are blended.

The resin sheet 11 of Experiment 34 has a three-layer structure.

Soft polypropylene type resin used for a middle layer of the sheet of Experiment 34 ... a resin composition (an elastic modulus in tension: 100 MPa) that is compounded by blending an amorphous polyolefin (density: 0.86 g/cm$^3$, melting viscosity at 190 °C: 10,000 cps) of 50 wt%, compounded by means of a random copolymerization of butene-1 (35 wt%) and propylene (65 wt%), and a crystalline polypropylene (MI: 1.00 g/10min., density: 0.90 g/cm$^3$) of 50 wt%. CAP-355 (trade name) made by UBE REXSEN CO., LTD.. The thickness ... 160 µm.

Resin used for the outer layers of the sheet of Experiment 34 ... a hard polypropylene type resin. F-704NP (trade name) made by Idemitsu Petrochemical Co., Ltd.. The thickness of each outer layer ... 20 µm.

Comparisons 7 and 8

The resin sheet is made by the same manner as the Comparison 1.

The structure of the resin sheet and the composition of resin relating to Comparisons 7 and 8 are the same as that in Comparisons 1 and 2.

Evaluations concerning properties

The resin sheets that are obtained in Experiments 26 to 34 and Comparisons 7 and 8 are measured as to the haze (the total haze/the inner haze), the gloss, and the elastic modulus in tension. The results are shown in Tables 7 and 8.

The number of foreign substances is sighted in a range from 100 to 400 foreign substances in each of Experiments 26 to 34.

The average length of the foreign substance ranges from 1 µm to 5 µm in each of Experiments 26 to 34.

Table 7

|  | Composition & layer structure of sheet | Haze (%) | Gloss (%) | Elastic modulus (MPa) |
|---|---|---|---|---|
| E26 | low-stereoregular PP | 2.5/1.5 | 135 | 500 |
| E27 | EPR fine-dispersion E-P copolymer | 6.0/3.0 | 110 | 150 |
| E28 | EPR fine-dispersion E-P copolymer | 5.0/2.0 | 100 | 100 |
| E29 | E-P random copolymer | 5.0 / 2.5 | 110 | 100 |
| E30 | E-P random copolymer | 3.0 / 1.5 | 120 | 120 |
| E31 | low-stereoregular PP/hydrogenated SBR | 2.0 / 1.0 | 120 | 150 |
| E32 | low-stereoregular PP / EPR | 3.5 / 1.5 | 130 | 450 |
| E33 | low-stereoregular PP / E-Oc | 2.0 / 1.5 | 130 | 400 |
| E34 | PP//amorphous PO//PP | 1.0 / 0.2 | 130 | 120 |

E26 to E34 are Experiments 26 to 34.

PP is polypropylene.

EPR is ethylene-propylene rubber.

E-P is ethylene-propylene.

PO is polyolefin.

SBR is styrene-butadiene.

E-Oc is a ethylene-octane copolymer.

Table 8

|  | Composition & layer structure of sheet | Haze (%) | Gloss (%) | Elastic modulus (MPa) |
|---|---|---|---|---|
| C7 | low-stereoregular PP | 10.0 / 7.0 | 100 | 500 |
| C8 | PP // amorphous PO // PP | 8.0/4.0 | 100 | 120 |

C7 and C8 are Comparisons 7 and 8.

From Table 7, according to Experiments 26 to 30, it is concluded that the resin sheet 11, extruded from an extruder by using a soft polypropylene type resin as the materials, is cooled in the producing apparatus, so that the obtained resin sheet 11 has the lower total haze and the lower inner haze, resulting in the appreciable transparency. The high gloss effects the sufficient shine. In addition, the elastic modulus in tension is low, resulting in the sheet wealthy in flexibility.

According to Experiment 31, it is concluded that the resin sheet is similarly made by using the resin composition consisting of a soft polypropylene type resin and a hydrogenated SBR as materials, so that the obtained resin sheet 11 has the low haze and the high gloss.

According to Experiment 32, it is concluded that the resin sheet is similarly made by using the resin composition consisting of a soft polypropylene type resin and an ethylene-aolefin copolymer as materials, so that the obtained resin sheet 11 has the low haze and the high gloss. The elastic modulus in tension is low and the flexibility is effective.

According to Experiment 33, it is concluded that the resin sheet is similarly made by using the resin composition consisting of a soft polypropylene type resin and an ethylene-octane copolymer as materials, so that the obtained resin sheet 11 has the low haze and the high gloss. The elastic modulus in tension elasticity is low and the flexibility is sufficient.

According to Experiment 34, even in the three-layer structure having both the outer layers of the sheet that is made of a soft polypropylene type resin, the haze, the gloss and the elastic modulus in tension are appropriately ensured.

From Table 8, according to Comparison 7, the same materials as that in Experiment 1 is used but the resin sheet is made by the touch roll sheet forming method, so that the total haze and the inner haze of the obtained resin sheet are high, thereby being the substandard transparency. The shine results in being less than adequate by reason of the low gloss.

According to Comparison 8, the resin sheet is made by the touch roll sheet forming method, so that the obtained resin sheet has the high total haze, resulting in the inferior transparency.

Experiments 35 to 37

The resin sheet 11 is fabricated by changing specific examples, the compounding proportions of the raw materials of the sheet, and so on in each experiment as described hereinafter. Table 9 shows the aforementioned properties (a) to (c) which are shown in the resin sheet 11 obtained in each experiment. The specific conditions for producing are the same as in Experiment 1. The temperature of the cooling water 36 is 6 °C.

A soft polypropylene type resin of Experiment 35 is the same as in Experiment 17.

In Experiment 36, the endless belt 15 of the first embodiment is heated at 100 °C, and the resin sheet 11 that is obtained in Experiment 35 undergoes an annealing treatment by using the heated endless belt 15.

In Experiment 37, the endless belts 23 and 26 of the third embodiment are heated at 100 °C, and the resin sheet 11 that is obtained in Experiment 35 undergoes an annealing treatment by using the heated endless belts 23 and 26.

Experiments 38 and 39

In Experiment 38, the endless belt 15 of the first embodiment is heated at 80 °C, and the resin sheet that is obtained in Experiment 17 undergoes an annealing treatment by using the heated endless belt 15.

In Experiment 39, the endless belts 23 and 26 of the third embodiment are heated at 100 °C, and the resin sheet 11 that is obtained in Experiment 17 undergoes an annealing treatment by using the heated endless belts 23 and 26.

Evaluation concerning properties

The resin sheets that are obtained in Experiments 35 to 39 are measured as to the average length of the foreign substances, the surface-roughness, the haze, the gloss, and the elastic modulus in tension. The results are shown in Table 9.

The number of foreign substances is sighted in a range from 100 to 400 foreign substances in each of Experiments 35 to 39.

The average length of the foreign substance ranges from 1 μm to 5 μm in each of Experiments 35 to 39.

Table 9

| | | Composition & layer structure of sheet | Elastic modulus in tension (MPa) | Size of foreign substance (μm) | Surface-Roughness (μm) | | Haze (%) | | Gloss (%) |
|---|---|---|---|---|---|---|---|---|---|
| | | | | | inner | outer | total | inner | |
| | E35 | PP // Plastomer // PP | 120 | < 10 | 0.041 | 0.038 | 2 | 1.5 | 120 |
| | E36 | PP // Plastomer // PP | 120 | < 10 | 0.039 | 0.028 | 4 | 1.5 | 120 |
| | E37 | PP // Plastomer // PP | 120 | < 10 | 0.032 | 0.034 | 4 | 1.5 | 120 |
| | E38 | PP // Plastomer // PP | 100 | < 10 | 0.035 | 0.039 | 3 | 1.5 | 120 |
| | E39 | PP // Plastomer // PP | 100 | < 10 | 0.033 | 0.03 | 3 | 1.5 | 120 |

From Table 9, the resin sheets 11 that are obtained in Experiments 35 to 39 are made of a soft polyolefin type resin having the aforementioned properties (a) to (c), so that the total haze and the inner haze are low, thereby allowing the transparency to be high-grade. Additionally, the high gloss effects the sufficient shine.

**Claims**

1.  A soft transparent polyolefin resin sheet comprising, as a major volume fraction thereof, a non-crystalline resin, the sheet having:

    (a) an elastic modulus in tension in the range from 20 MPa to 1,000 MPa;
    (b) a surface-roughness Ra of at least one of faces of the sheet being less than 0.2 μm,

    wherein any foreign substances present in the sheet having a refractive index different to the refractive index of the non-crystalline resin have a length of less than 10 μm, and are present in an amount of less than 500 foreign substances/mm² of sheet.

2.  A soft transparent polyolefin resin sheet according to claim 1, which comprises a multilayered structure, at least one of outer faces of the multilayered structures being made of a hard polypropylene type resin.

3.  A soft transparent polyolefin resin sheet according to claim 1, wherein the soft transparent polyolefin resin sheet is formed by a low-stereoregular polypropylene type resin having a ratio of mmmm (a value of PI) ranging from 50 % to 90 % in a pentad ratio measured by using $^{13}$C-NMR with respect to stereoregularity of homo-polypropylene.

4.  A soft transparent polyolefin resin sheet according to claim 3, wherein a value of rrrr/(1-mmmm) of the low-stereoregular polypropylene type resin ranges from 15 % to 50 %.

5.  A soft transparent polyolefin resin sheet according to claim 3, wherein the low-stereoregular polypropylene type resin consists of 50 wt% to 95 wt% of a polypropylene type resin which is insoluble in boiling heptane and which has a limiting viscosity ranging from [μ]0.5 dl/g to [μ]9.0 dl/g, and 5 wt% to 50 wt% of a polypropylene type resin which is soluble in boiling heptane and which has a limiting viscosity of more than [μ]1.2 dl/g, limiting viscosity being measured in decalin at 135°C.

6.  A soft transparent polyolefin resin sheet according to claim 1, wherein the soft transparent polyolefin resin sheet is formed by an ethylenepropylene random copolymer (ethylene content ranging from 5 wt% to 30 wt%).

7.  A soft transparent polyolefin resin sheet according to claim 6, wherein the ethylene-propylene random copolymer comprises a unit of PPEP, in which E is ethylene and P is propylene, and the proportion of the unit which has a racemic configuration as compared to the continuous PP portion thereof is extremely small.

8. A soft transparent polyolefin resin sheet according to claim 1, wherein the soft transparent polyolefin resin sheet is formed from a non-crystalline butene-1-propylene copolymer.

9. A soft transparent polyolefin resin sheet according to claim 1, wherein the soft transparent polyolefin resin sheet is formed from a compound of a non-crystalline butene-1-propylene copolymer and polypropylene.

10. A soft transparent polyolefin resin sheet according to claim 1, wherein the soft transparent polyolefin resin sheet is formed from a propylene-ethylene-butene-1 copolymer.

11. A soft transparent polyolefin resin sheet according to claim 1, wherein the soft transparent polyolefin resin sheet is formed from a compound of a propylene-ethylene-butene-1 copolymer and polypropylene.

12. A soft transparent polyolefin resin sheet according to claim 1, wherein the soft transparent polyolefin resin sheet contains a reactor blending type ethylene-propylene copolymer elastomer.

13. A soft transparent polyolefin resin sheet according to claim 1, wherein the soft transparent polyolefin resin sheet contains a reactor blending type ethylene-propylene-butene-1 copolymer.

14. A soft transparent polyolefin resin sheet according to claim 1, wherein the soft transparent polyolefin resin sheet is formed from at least one selected from an ethylene monopolymer and an ethylene-$\alpha$-olefin copolymer.

15. A soft transparent polyolefin resin sheet according to claim 14, wherein the ethylene monopolymer is at least one selected from a high-pressure-produced low-density polyethylene and a low-pressure-produced low-density polyethylene.

16. A soft transparent polyolefin resin sheet according to claim 14, wherein the ethylene-$\alpha$-olefin copolymer is at least one selected from a Ziegler-Natta catalyst type linear low-density polyethylene, a metallocene catalyst type linear low-density polyethylene, and an ethylene-octane copolymer having long branching in a main chain polymerized by using C. G. C. T. (Constrained Geometry Catalyst Technology).

17. A soft transparent polyolefin resin sheet according to claim 2, wherein the outer face is resin selected from homopolypropylene, an ethylene-propylene random copolymer (ethylene content ranging from 0.1 wt% to 10 wt%), and an ethylene-butene-propylene random copolymer (ethylene and butene content ranging from 0.1 wt% to 10 wt%).


**Patentansprüche**

1. Weiche transparente Polyolefinharzfolie, die als hauptsächlichen Volumenanteil hiervon ein nicht-kristallines Harz enthält, wobei die Folie aufweist:

   (a) einen elastischen Zugspannungsmodulus im Bereich von 20 MPa bis 1000 MPa;

   (b) eine Oberflächenrauhigkeit Ra auf zumindest einer der Seiten der Folie, die weniger als 0,2 µm beträgt,

   wobei jegliche Fremdpartikel, die in der Folie vorliegen und einen Brechungsindex aufweisen, der sich vom Brechungsindex des nicht-kristallinen Harzes unterscheidet, eine Länge von kleiner als 10 µm aufweisen, und in einer Menge von weniger als 500 Fremdpartikeln pro mm$^2$ der Folie vorliegen.

2. Weiche transparente Polyolefinharzfolie gemäß Anspruch 1, die einen mehrlagigen Aufbau aufweist, wobei zumindest eine der äußeren Oberflächen des mehrlagigen Aufbaus aus einem harten polypropylenartigen Harz besteht.

3. Weiche transparente Polyolefinharzfolie gemäß Anspruch 1, wobei die weiche transparente Polyolefinharzfolie gebildet wird aus einem niedrig-stereoregulären polypropylenartigen Harz mit einem Verhältnis von mmmm (einem Wert von PI) im Bereich von 50 % bis 90 % in einem Pentadenverhältnis, welches gemessen worden ist unter

Verwendung von $^{13}$C-NMR mit Hinblick auf die Stereoregularität eines Homo-Polypropylens.

4.  Weiche transparente Polyolefinharzfolie gemäß Anspruch 3, wobei ein Wert von rrrr/(1-mmmm) des niedrig-stereoregulären polypropylenartigen Harzes im Bereich von 15 % bis 50 % liegt.

5.  Weiche transparente Polyolefinharzfolie gemäß Anspruch 3, wobei das niedrig-stereoreguläre polypropylenartige Harz aus 50 Gew.-% bis 95 Gew.-% eines polypropylenartigen Harzes besteht, welches unlöslich ist in kochendem Heptan und welches eine Grenzviskosität aufweist im Bereich von [μ]0,5 dl/g bis [μ]9,0 dl/g, 5 Gew.-% bis 50 Gew.-% eines polypropylenartigen Harzes, welches löslich ist in kochendem Heptan und welches eine Grenzviskosität von mehr als [μ]1,2 dl/g aufweist, wobei die Grenzviskosität in Dekalin bei 135°C gemessen wird.

6.  Weiche transparente Polyolefinharzfolie gemäß Anspruch 1, wobei die weiche transparente Polyolefinharzfolie gebildet wird aus einem statistischen Ethylen-Propylen-Copolymer (wobei der Ethylengehalt zwischen 5 Gew.-% bis 30 Gew.-% liegt).

7.  Weiche transparente Polyolefinharzfolie gemäß Anspruch 6, wobei das statistische Ethylen-Propylen-Copolymer eine Einheit von PPEP enthält, wobei E Ethylen ist, und P Propylen ist, und der Anteil der Einheit, welche einen razemischen Aufbau aufweist, im Vergleich zu dem kontinuierlichen PP-Anteil hiervon extrem klein ist.

8.  Weiche transparente Polyolefinharzfolie gemäß Anspruch 1, wobei die weiche transparente Polyolefinharzfolie gebildet wird aus einem nicht-kristallinen Buten-1-Propylen-Copolymer.

9.  Weiche transparente Polyolefinharzfolie gemäß Anspruch 1, wobei die weiche transparente Polyolefinharzfolie gebildet ist aus einer Verbindung eines nicht-kristallinen Buten-1-Propylen-Copolymers und Polypropylen.

10.  Weiche transparente Polyolefinharzfolie gemäß Anspruch 1, wobei die weiche transparente Polyolefinharzfolie gebildet wird aus einem Propylen-Ethylen-Buten-1-Copolymer.

11.  Weiche transparente Polyolefinharzfolie gemäß Anspruch 1, wobei die weiche transparente Polyolefinharzfolie gebildet ist aus einer Verbindung eines Propylen-Ethylen-Buten-1-Copolymers und Polypropylen.

12.  Weiche transparente Polyolefinharzfolie gemäß Anspruch 1, wobei die weiche transparente Polyolefinharzfolie einen im Reaktor gemischten Typ eines Ethylen-Propylen-Copolymerelastomeren enthält.

13.  Weiche transparente Polyolefinharzfolie gemäß Anspruch 1, wobei die weiche transparente Polyolefinharzfolie einen im Reaktor gemischten Typ eines Ethylen-Propylen-Buten-1-Copolymers enthält.

14.  Weiche transparente Polyolefinharzfolie gemäß Anspruch 1, wobei die weiche transparente Polyolefinharzfolie gebildet wird aus zumindest einem Bestandteil, ausgewählt aus einem Ethylen-Monopolymer und einem Ethylen-α-Olefin-Copolymer.

15.  Weiche transparente Polyolefinharzfolie gemäß Anspruch 14, wobei das Ethylen-Monopolymer zumindest eines ist, das ausgewählt ist aus einem unter hohem Druck hergestellten Polyethylen niedriger Dichte und einem unter niedrigem Druck hergestellten Polyethylen niedriger Dichte.

16.  Weiche transparente Polyolefinharzfolie gemäß Anspruch 14, wobei das Ethylen-α-Olefin-Copolymer zumindest eines ist, welches ausgewählt ist aus einem linearen Polyethylen vom Ziegler-Natta Katalysatortyp mit niedriger Dichte, einem linearen Polyethylen vom metallorganischen Katalysatortyp mit niedriger Dichte und einem Ethylen-Oktan-Copolymer mit langer Verzweigung in einer Hauptkette, die polymerisiert wurde unter Verwendung von C. G. C. T. (Constrained Geometry Catalyst Technology - Katalysatorverfahren mit begrenzter Geometrie).

17.  Weiche transparente Polyolefinharzfolie gemäß Anspruch 2, wobei die äußere Oberfläche ein Harz ist, ausgewählt von Homo-Polypropylen, einem statistischen Ethylen-Propylen-Copolymer (mit einem Ethylengehalt im Bereich von 0,1 Gew.-% bis 10 Gew.-%) und einem statistischen Ethylen-Buten-Copolymer (mit einem Ethylen- und Butengehalt im Bereich von 0,1 Gew.-% bis 10 Gew.-%).

# EP 0 838 321 B1

**Revendications**

1. Feuille de résine polyoléfine transparente molle comprenant, comme fraction volumique majeure, une résine non-cristalline, la feuille présentant :

   (a) un module élastique en traction dans la gamme de 20 MPa à 1 000 MPa ;
   (b) une rugosité superficielle Ra d'au moins l'une des faces de la feuille étant inférieure à 0,2 µm,

   dans laquelle tous les corps étrangers présents dans la feuille présentant un indice de réfraction différent de l'indice de réfraction de la résine non-cristalline ont une longueur inférieure à 10 µm, et sont présents en une quantité inférieure à 500 corps étrangers/mm$^2$ de feuille.

2. Feuille de résine polyoléfine transparente molle selon la revendication 1, qui possède une structure à couches multiples, au moins l'une des faces externes des structures à couches multiples étant composée d'une résine du type polypropylène dur.

3. Feuille de résine polyoléfine transparente molle selon la revendication 1, dans laquelle la feuille de résine polyoléfine transparente molle est formée d'une résine du type polypropylène à faible stéréorégularité ayant un rapport de mmmm (valeur de PI) allant de 50 % à 90 % pour un rapport de pentade mesuré par RMN $^{13}$C en se référant à la stéréorégularité de l'homopolypropylène.

4. Feuille de résine polyoléfine transparente molle selon la revendication 3, dans laquelle la valeur rrrr/(1-mmmm) de la résine du type polypropylène à faible stéréorégularité est comprise entre 15 % et 50 %.

5. Feuille de résine polyoléfine transparente molle selon la revendication 3, dans laquelle la résine du type polypropylène à faible stéréorégularité est constituée de 50 % en poids à 90 % en poids d'une résine du type polypropylène qui est insoluble dans l'heptane en ébullition, possède une viscosité limite allant de [η]0,5 dl/g à [η]9,0 dl/g et de 5 % à poids à 50 % en poids d'une résine du type polypropylène qui est soluble dans l'heptane en ébullition et possède une viscosité limite de plus de [η]1,2 dl/g, la viscosité limite étant mesurée dans la décaline à 135°C.

6. Feuille de résine polyoléfine transparente molle selon la revendication, dans laquelle la feuille de résine polyoléfine transparente molle est formée d'un copolymère aléatoire d'éthylène-propylène (la teneur en éthylène allant de 5 % en poids à 30 % en poids).

7. Feuille de résine polyoléfine transparente molle selon la revendication 6, dans laquelle le copolymère aléatoire d'éthylène-propylène comprend une unité de PPEP, dans laquelle E représente l'éthylène et P représente le propylène et dans laquelle la proportion de l'unité qui présente une configuration racémique comparée à sa partie continue PP est extrêmement faible.

8. Feuille de résine polyoléfine transparente molle selon la revendication 1, dans laquelle la feuille de résine polyoléfine transparente molle est formée d'un copolymère non cristallin de butène-1-propylène.

9. Feuille de résine polyoléfine transparente molle selon la revendication 1, dans laquelle la feuille de résine polyoléfine transparente molle est formée d'un composé de copolymère non cristallin de butène-1-propylène et de polypropylène.

10. Feuille de résine polyoléfine transparente molle selon la revendication 1, dans laquelle la feuille de résine polyoléfine transparente molle est formée d'un copolymère de propylène-éthylène-butène-1.

11. Feuille de résine polyoléfine transparente molle selon la revendication 1, dans laquelle la feuille de résine polyoléfine transparente molle est formée d'un composé de copolymère de propylène-éthylène-butène-1 et de polypropylène.

12. Feuille de résine polyoléfine transparente molle selon la revendication 1, dans laquelle la feuille de résine polyoléfine transparente molle contient un élastomère issu d'un copolymère d'éthylène-propylène du type brassé dans un réacteur.

13. Feuille de résine polyoléfine transparente molle selon la revendication 1, dans laquelle la feuille de résine polyoléfine transparente molle contient un copolymère d'éthylène-propylène-butène-1 du type brassé dans un réacteur.

14. Feuille de résine polyoléfine transparente molle selon la revendication 1, dans laquelle la feuille de résine polyoléfine transparente molle est formée d'au moins l'un choisi parmi un monopolymère d'éthylène et un copolymère d'éthyléne-$\alpha$-oléfine.

15. Feuille de résine polyoléfine transparente molle selon la revendication 14, dans laquelle le monopolymère d'éthylène est au moins l'un choisi parmi un polyéthylène faible densité produit à haute pression et un polyéthylène faible densité produit à basse pression.

16. Feuille de résine polyoléfine transparente molle selon la revendication 14, dans laquelle le copolymère d'éthylène-$\alpha$-oléfine est au moins l'un choisi parmi un polyéthylène à faible densité linéaire du type catalyseur de Ziegler-Natta, un polyéthylène à faible densité linéaire du type catalyseur au métallocène, et un copolymère d'éthylène-octane portant une longue ramification dans une chaîne principale polymérisée en utilisant la technique appelée C.G.C. T. (technologie de catalyseur à géométrie contrainte).

17. Feuille de résine polyoléfine transparente molle selon la revendication 2, dans laquelle la face externe est une résine choisie parmi l'homopolypropylène, un copolymère aléatoire d'éthylène-propylène (la teneur en éthylène allant de 0,1 % en poids à 10 % en poids), et un copolymère aléatoire d'éthylène-butène-propylène (la teneur en éthylène et en butène allant de 0,1 % en poids à 10 % en poids).

# F I G.1

EP 0 838 321 B1

# F I G.2

# F I G.3

# F I G.4